# EUROPÄISCHE PATENTSCHRIFT

(11) **EP 3 916 451 B1**
(45) Veröffentlichungstag und Bekanntmachung des Hinweises auf die Patenterteilung: **25.01.2023**
(21) Anmeldenummer: 20177466.8
(22) Anmeldetag: 29.05.2020
(51) Int. Cl.: G02B 6/44

(54) **SCHWENKMODULEINRICHTUNG FÜR LWL-KABEL MIT ABDECKPLATTE**
PIVOTING MODULE DEVICE FOR OPTICAL FIBRE CABLE WITH A COVER PLATE
DISPOSITIF DE MODULE PIVOTANT POUR CÂBLES FO POURVU DE PLAQUE DE RECOUVREMENT

(43) Veröffentlichungstag der Anmeldung: 01.12.2021
(73) Patentinhaber: Hauff-Technik GRIDCOM GmbH, 73494 Rosenberg (DE)
(72) Erfinder: Hammer, Ralf, 73489 Jagstzell (DE); Gschwinder, Roland, 73431 Aalen (DE)
(74) Vertreter: König Szynka Tilmann von Renesse Patentanwälte Partnerschaft mbB München

(56) Entgegenhaltungen:
- EP-A2- 0 293 183
- US-A- 4 595 255
- US-A1- 2007 054 528
- US-B1- 6 263 141

## Beschreibung

Die Erfindung betrifft eine Schwenkmoduleinrichtung für das LWL-Kabelmanagement. Die Abkürzung steht dabei für Lichtwellenleiterkabel, die auch als Glasfaserkabel bezeichnet werden.

LWL-Kabel dienen zur Signalübertragung mit hohen Übertragungsraten und/oder hoher räumlicher Reichweite und finden immer stärkeren Einsatz. Insbesondere werden zunehmend die LWL-Kabelnetze bis zum Verbraucher verlegt oder sogar bis zum Endgerät im Haushalt oder Büro. Mit dem Ausbau der LWL-Kabelnetze stellt sich immer häufiger die Aufgabe der Verbindung von LWL-Kabeln untereinander.

Das LWL-Kabelmanagement betrifft dabei die Herstellung, Änderung und organisierte Ablage von Anschlussstellen und Reserveüberlängen der Kabel. Bei den Anschlussstellen kann es sich um Spleiß- oder um Patchstellen handeln. Die erfindungsgemäße Schwenkmoduleinrichtung kann für mindestens eine dieser Aufgaben vorgesehen sein.

Dabei werden die einzelnen Fasern mit einer an sich bekannten Technologie aneinandergefügt und diese Spleiß- und Patchstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern), insbesondere Patchkabel, eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und/oder Patchstellen verfügen bekannte Module typischerweise über einen bewegten schubladenähnlichen Auszug und eine ortsfeste Halterung. Bei besonderen Varianten ist der Auszug nicht translatorisch auszuziehen, sondern um eine Schwenkachse, typischerweise in der Nähe der Ecke der Halterung, aufschwenkbar. Im Folgenden wird diesbezüglich von einem Schwenkmodul gesprochen (also quasi einer Drehlade anstelle einer Schublade). Beispielhaft kann verwiesen werden auf die EP 2 221 650 A1.

Die US 2007/054528 A1 zeigt ein Gehäuse für die Behausung von elektrischen Kabelverbindungen, insbesondere eines Patchelements für elektrische Kabelverbindungen. Das Dokument zeigt in einer ersten Ausführung eine Tür des Gehäuses, die um 180° zur linken Seite aufgeschwenkt werden kann. Außerdem ist ein im Inneren des Gehäuses angeordneter Rahmen für die elektrischen Patchverbindungen um ca. 90°zur rechten Seite des Gehäuses aufschwenkbar.

Auf dieser Grundlage liegt der vorliegenden Erfindung die Aufgabe zugrunde, eine hinsichtlich Nutzeigenschaften und/oder Aufbau und Herstellung verbesserte Lösung für eine Schwenkmoduleinrichtung anzugeben.

Die vorliegende Erfindung geht von einem solchen Schwenkmodul aus, wobei dieses schwenkbare Modul Teil einer Schwenkmoduleinrichtung ist, die darüber hinaus ein das Schwenkmodul schwenkbar haltendes Gehäuse für das Schwenkmodul und eine Abdeckplatte zum Abdecken des in das Gehäuse eingeschwenkten Schwenkmoduls aufweist.

Solche Abdeckplatten sind grundsätzlich bereits bekannt und können zum weitergehenden Schutz eines Schwenkmoduls in dem Gehäuse dienen. Sie können um eine hier so genannte Modulachse zwischen einer geöffneten und einer geschlossenen Position verschwenkbar sein. Im Stand der Technik finden sich z. B. einzelnen beweglichen Modulen zugeordnete Abdeckplatten an deren Vorderseite, die um eine quer liegende horizontale Achse herunterklappbar oder um eine zu der flächigen Erstreckung der geschlossenen Abdeckplatte ungefähr senkrechte horizontale Achse auf- und zuklappbar sind.

Im Unterschied dazu betrifft die vorliegende Erfindung eine Abdeckplatte mit einer vertikalen Schwenkachse, die hier als Abdeckplattenachse bezeichnet wird. Diese soll parallel verlaufen zu der ebenfalls vertikalen Modulachse, aber von dieser entfernt, vorzugsweise relativ weit entfernt, z. B. annähernd an einer entgegengesetzten Seite oder Ecke des Gehäuses angeordnet sein. Wenn das Schwenkmodul einerseits und die Abdeckplatte andererseits teilweise oder ganz ausgeschwenkt werden, bewegen sie sich also unterschiedlich, wobei sie erfindungsgemäß so ausgestaltet sind, dass sie in bestimmten jeweiligen Positionen aneinander arretierbar sind. Damit kann die Abdeckplatte das Schwenkmodul in einem zumindest teilweise ausgeschwenkten Zustand stützen und stabilisieren.

Dadurch erreicht die Erfindung eine stabilere Halterung des Schwenkmoduls in der beschriebenen Position, sodass an in dieser Position zugänglichen Stellen des Schwenkmoduls unter Ausnutzung dieser Stabilisierung gearbeitet werden kann. Zum Beispiel können Patchstellen geöffnet oder geschlossen werden, Spleißstellen aus Spleißstellenablagen entnommen oder in diese hineingelegt werden, abgelegte Kabellängen ganz oder teilweise aus dem Schwenkmodul herausgezogen werden oder zusätzliche Kabellängen dort abgelegt werden. Dabei erlaubt die Erfindung je nach Zielsetzung der individuellen Ausgestaltung eine stabilere Verfassung des in dieser Position befindlichen Schwenkmoduls und/oder größere Freiheitsgrade bei der Ausgestaltung des Schwenkmoduls und seiner Halterung über die Modulachse oder der Halterung der Modulachse am Gehäuse. In anderen Worten kann das mindestens teilweise ausgeschwenkte Schwenkmodul besonders stabil gehalten werden und/oder können die beschriebenen konstruktiven Einzelheiten etwas weniger stabil ausgeführt werden, weil ja durch die Abdeckplatte in einer entscheidenden Situation eine weitere Stabilisierung gegeben ist.

Vorzugsweise richtet sich die Erfindung auf eine Schwenkmoduleinrichtung mit einem Stapel aus Schwenkmodulen übereinander. Insbesondere kann hierbei eine für alle oder jedenfalls mehrere Schwenkmodule gemeinsame Abdeckplatte vorgesehen sein, mit der die einzelnen Schwenkmodule jeweils (ausgeschwenkt) gekoppelt werden können. Die Vereinheitlichung der Abdeckplatte für eine Mehrzahl übereinander gestapelte Schwenkmodule vereinfacht nicht nur den Aufbau, sondem stabilisiert die Konstruktion durch die zunehmende vertikale Länge der Abdeckplattenachse.

Bevorzugt ist dabei und überhaupt, dass es für die Schwenkmodule keine weiteren Abdeckplatten gibt, also insbesondere keine individuellen Abdeckplatten an den Vorderseiten der Schwenkmodule. Auch dies dient der Vereinfachung von Bedienung und Herstellung.

Die erfindungsgemäße Abdeckplatte kann auch für eine Beschriftungsmöglichkeit oder als Informationsträger z. B. für Nummerierungen der Schnittmodule oder frontseitiger Patchstellen an diesen genutzt werden. Das betrifft die Außenseite, aber auch die Innenseite der Abdeckplatte, die in dem arretierten Zustand typischerweise teilweise sichtbar ist und damit, anders als im Stand der Technik, für zusätzliche Informationen verwendet werden kann.

Die Modulachse liegt vorzugsweise in der Nähe einer der beiden vorderen seitlichen Ecken des Gehäuses, also näher an der Vorderseite der Schwenkmoduleinrichtung als an ihrer Hinterseite und dabei außermittig zu einer der beiden Seiten. Die Abdeckplattenachse liegt dann vorzugsweise auf der anderen Seite (also z. B. rechts statt links oder umgekehrt) und besonders bevorzugterweise ebenfalls näher an der Vorderseite als an der Hinterseite. Zur Illustration wird auf das Ausführungsbeispiel verwiesen.

Die Achslagen können dabei insoweit wählbar sein, als die Schwenkmodule selbst weitgehend symmetrisch aufgebaut sind, also eine rechte und eine linke Modulachsenposition erlauben. Das kann in gleicher Weise für das Gehäuse gelten oder das Gehäuse kann im Bedarfsfall umgedreht verwendet werden (sodass die Abdeckplattenachse die Seite wechselt, wobei das Gehäuse dann weitgehend symmetrisch hinsichtlich oben und unten aufgebaut ist).

Bei einer bevorzugten Ausgestaltung existieren mindestens zwei und im Fall des Ausführungsbeispiels genau zwei Schwenkpositionen der Abdeckplatte einerseits und des zumindest einen Schwenkmoduls andererseits zur gegenseitigen Arretierung. Dabei kann z. B. eine weniger "offene" Schwenkposition dazu dienen, nur vordere Bereiche eines Schwenkmoduls für bestimmte Manipulationen zugänglich zu machen, weiter hinten liegende aber nicht, z. B. vorne liegende Patchstellen bedienen zu können, weiter hinten liegende Spleißstellenablagen aber nicht. Letztere sind dann also geschützt. Andererseits können in einer anderen oder der anderen Schwenkposition auch die erwähnten hinten liegenden Bereiche zugänglich sein.

Die kurz erwähnte "Arretierung" kann in verschiedener Weise realisiert sein. Bevorzugt sind ohne weitere Werkzeuge betätigbare Lösungen, also z. B. die Vermeidung von Schrauben oder Muttern mit entsprechenden Eingriffen oder Sechskantstrukturen. Besonders günstig sind die Eingriffe von Vorsprüngen in dafür vorgesehene Öffnungen, wobei vorzugsweise die Vorsprünge an dem Schwenkmodul und die Öffnungen in der Abdeckplatte vorgesehen sind.

Der Eingriff eines solchen Vorsprungs kann in verschiedener Weise gesichert werden, beispielsweise durch mindestens zwei zueinander schräg stehende Außenflächen, die für eine Keilwirkung sorgen. Damit kann der Vorsprung in der Öffnung verklemmt werden.

Außerdem oder alternativ könnte der Vorsprung einen Haken aufweisen und damit in der Öffnung gegen Herausziehen gesichert werden, nämlich indem der Haken über eine der die Öffnung begrenzenden Wände geschoben oder gelegt wird.

Eine weitere bevorzugte Anwendungsmöglichkeit für einen solchen Haken, und zwar insbesondere an einem dem beschriebenen Zweck dienenden Vorsprung, liegt in der Arretierung oder Sicherung des Schwenkmoduls im eingeschwenkten Zustand, also in dem Gehäuse. Dann kann der Haken z. B. über die Abdeckplattenachse gelegt oder aufgeklipst werden (also über einen diese bildenden Achsstift).

Die Arretierungseinrichtungen für die mindestens zwei verschiedenen Schwenkpositionen können besonders gut optimiert werden, wenn sie voneinander verschieden sind, also nicht diejenigen Arretierungseinrichtungen zwischen einem bestimmten Schwenkmodul und der Abdeckplatte für die eine Schwenkposition und diejenigen für die andere Schwenkposition teilidentisch sind. Es gibt dann z. B. einen Vorsprung und eine Öffnung für die eine und einen weiteren Vorsprung und eine weitere Öffnung für die andere Schwenkposition.

Insbesondere kann ein Vorsprung im Bereich einer vorderen Ecke des Schwenkmoduls und kann die zugehörige Öffnung ungefähr in der Mitte der Abdeckplatte vorgesehen sein (wobei der mittlere Bereich auf die Breitenrichtung der Abdeckplatte im geschlossenen Zustand bezogen ist und die Mitte ± 20 %, vorzugsweise ± 10 % bedeutet). Damit kann z. B. die weniger weit ausgeschwenkte Position bestimmt werden.

Ferner kann an einer hinteren Ecke des Schwenkmoduls ein weiterer Vorsprung vorgesehen sein, der kombiniert wird mit einer Öffnung außerhalb der Mitte der Abdeckplatte, nämlich eher zu der achsendistalen Seite der Abdeckplatte hin, z. B. in Bezug auf die Breitenrichtung jenseits von 70 %, vorzugsweise jenseits von 75 %. Das Ausführungsbeispiel illustriert diese Varianten.

Bevorzugte Anwendungsfälle betreffen Spleißmodule und Stapel daraus, Patchmodule und Stapel daraus oder, besonders bevorzugterweise, kombinierte Spleiß- und Patchmodule, bei denen innerhalb eines Moduls beide Verbindungen vorliegen, und Stapel daraus. Insbesondere können solche Stapel innerhalb eines Verteilerschranks angebracht sein.

Im Folgenden wird die Erfindung anhand von Ausführungsbeispielen näher erläutert, wobei die einzelnen Merkmale im Rahmen der Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine perspektivische Darstellung eines vereinfachten Spleißmoduls,
- Figur 2: einen Ausschnitt B aus Figur 1 vergrößert,
- Figur 3: einen Spleißmodulstapel mit Gehäuse und Abdeckplatte in perspektivischer Darstellung,
- Figur 4: eine Draufsicht analog Figur 3,
- Figuren 5: und 6 zeigen analoge Darstellungen zu den Figuren 3 und 4, aber in abweichender Position, und
- Figuren 7: und 8 zeigen Einzelteile des Ausführungsbeispiels aus den Figuren 3-6 vergrößert.

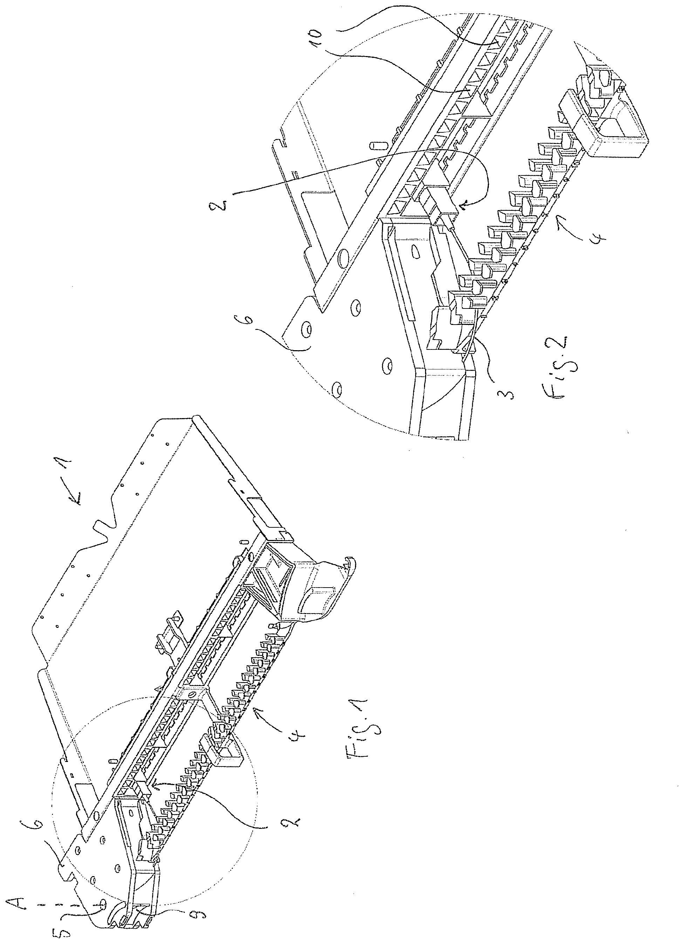

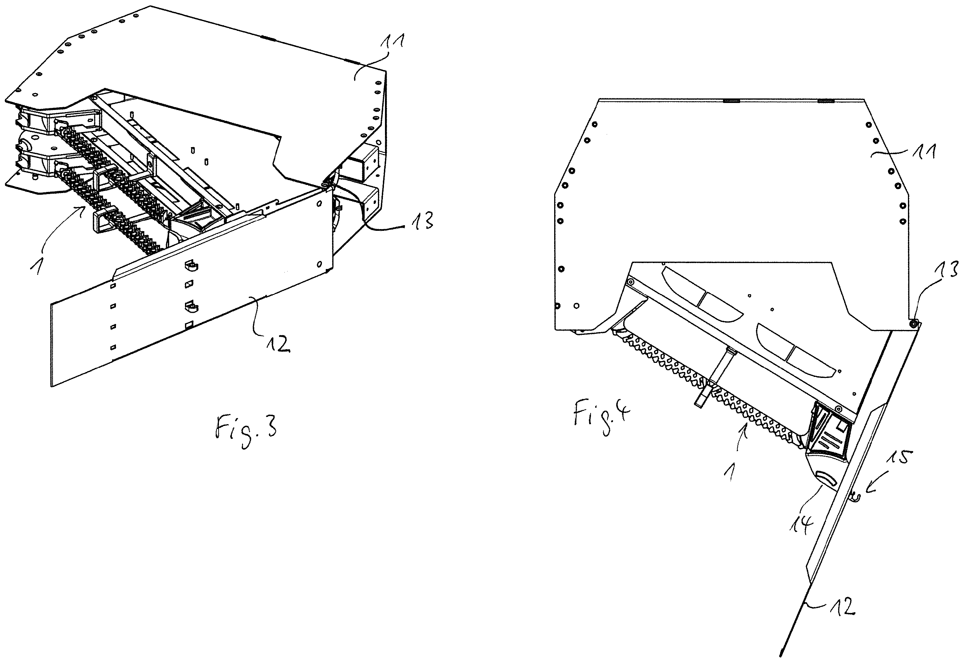

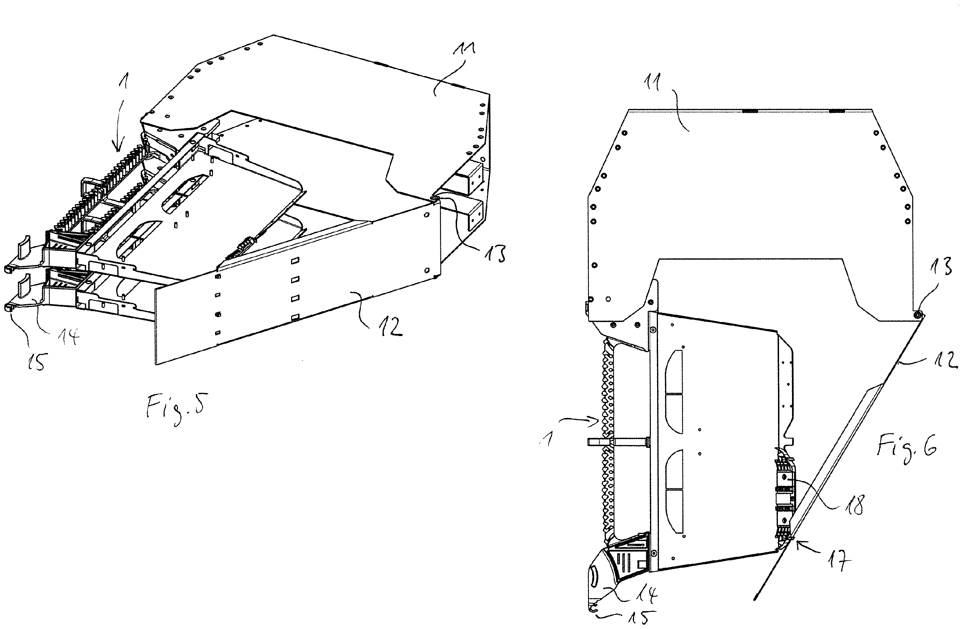

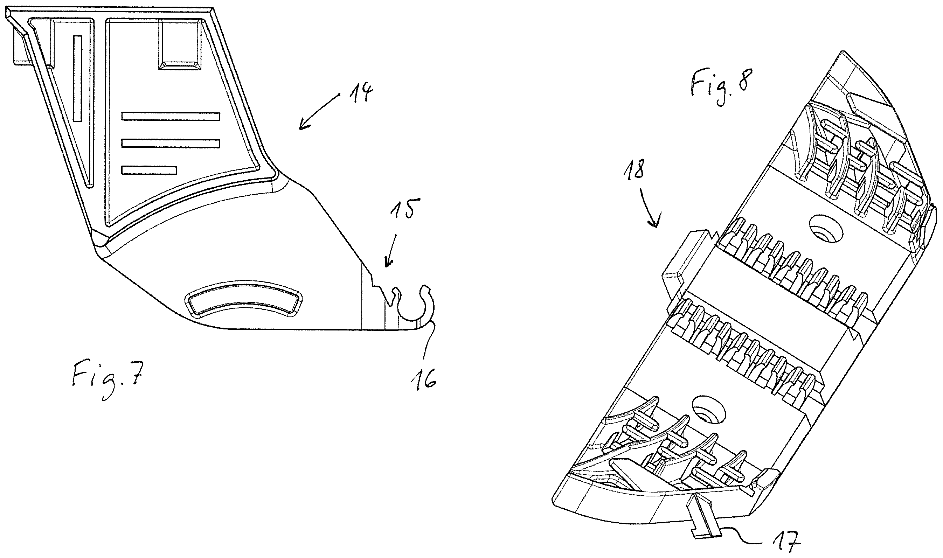

Zunächst wird zum Verständnis des Gesamtzusammenhangs auf die beiden bereits zitierten Dokumente EP 2 221 650 A1 und EP 3 511 753 A1 oder auch die EP 3 528 023 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 hinzudenken kann.

Im Übrigen zeigt Figur 1 (und natürlich auch die Vergrößerung des Bereichs B in Figur 2) eine steckbare Patchstelle 2, wobei die Figuren bereits veranschaulichen, dass tatsächlich (statt der einen dargestellten Patchstelle 2) 24 (nämlich 4 × 6) davon nebeneinander vorgesehen werden können. Man erkennt ferner, dass ein aus einer solchen steckbaren Patchstelle 2 herausführendes einzelnes Glasfaserkabel 3 durch den Patchstellen 2 vorgelagerte Reihen 4 von Führungsstiften hindurchgeführt ist und davor dann nach links in Richtung zur Schwenkachse A weiterläuft. Zur Verdeutlichung der Struktur des Spleißmoduls ist das Glasfaserkabel 3 in der Darstellung hier allerdings abgeschnitten.

Weiterhin zeigt das Spleißmodul 1 aus den Figuren 1 und 2 über der eingezeichneten Patchstelle 2 eine Reihe untereinander gleicher Öffnungen, und zwar in einer 1:1-Zuordnung zu den Patchstellen 2. Hierzu kann zum technischen Hintergrund zunächst verwiesen werden auf die EP 3 528 023 A1 der selben Anmelderin, vergleiche dort die Öffnungen 19 und die zugehörigen Steckelemente 14 in den Figuren 7 ff. Es geht hierbei um alternative Öffnungen für Patchstellen 2, und zwar für nicht aufzutrennende, also durchgehende Glasfaserkabel.

Man kann sich anhand Figur 1 die weiter oben in der Beschreibung bereits erwähnten Hebelverhältnisse zwischen der lateralen Ausdehnung des Spleißmoduls 1 (vor allem in der Querrichtung, also in Figur 1 von hinten links nach vorne rechts) und der Höhe der Abstützung an der Schwenkachse A vorstellen. Das gilt vor allem dann, wenn bei herausgeschwenktem Spleißmodul daran gearbeitet wird, also z. B. Kabel verlegt werden oder an Spleißstellen gearbeitet wird.

Figur 3 zeigt einen erfindungsgemäßen Spleißmodulstapel mit im Prinzip vier vertikal übereinander angeordneten Spleißmodulen 1 gemäß den Figuren 1 und 2, von denen allerdings der Übersichtlichkeit halber nur zwei gezeichnet sind. Ferner erkennt man ein die gestapelten Module 1 umfassendes Gehäuse 11, aus dem die beiden Module in Figur 3 teilweise ausgeschwenkt sind. Das Gehäuse 11 ist nach vorn mit einer in Figur 3 ebenfalls teilweise aufgeschwenkten Abdeckplatte 12 nach vorne abgedeckt (und weist tatsächlich abweichend von den Figuren auch Seitenwände auf). Figur 4 zeigt dieselbe Situation statt in perspektivischer Ansicht in Draufsicht und die Figuren 5 und 6 zeigen dementsprechend eine perspektivische Ansicht und eine Draufsicht mit einem ganz ausgeschwenkten Zustand der beiden Module 1.

Man erkennt dabei, dass die beiden Module mit ihrer bezüglich Figur 3 vorderen und in Bezug auf eine Frontansicht in einem eingeschwenkten Zustand vorderen rechten Ecke in einer rechteckigen Öffnung (einem ausgestanzten Rechteck) in der Abdeckplatte 12 gehalten sind. Dabei erstreckt sich die Abdeckplatte 12 über die gesamte vertikale Höhe des Modulstapels und hat insoweit mit einer relativ großen vertikalen Erstreckung und damit günstigen Hebelverhältnissen die Möglichkeit einer Abstützung der Module 1. In der arretierten Form stützt sich ein einzelnes Modul 1 dann nicht nur an seiner linksliegenden Schwenkachse, sondern darüber hinaus auch an der Abdeckplatte 12 ab, also zweiseitig und jedenfalls hinsichtlich der Abdeckplatte 12 über ein Element, das an einem Achsstift mit der gesamten vertikalen Erstreckung des Stapels gehalten ist.

Im vorliegenden Fall handelt sich um ein gebogenes und gestanztes Blechstück als Abdeckplatte 12, aber eine Kunststoffausführung wäre ebenfalls denkbar. Die vertikale Schwenkachse der Abdeckplatte 12 ist mit 13 bezeichnet; es handelt sich um einen durchgehenden metallischen Achsstift. Das in Figur 4 und Figur 6 gut sichtbare Teil 14 eines jeweiligen Moduls 1, das den in die Öffnung in der Abdeckplatte 12 eingreifenden Vorsprung 15 trägt, ist in Figur 7 im Detail dargestellt und in Figur 1 in perspektivischer Darstellung zu erkennen. Für die vorliegende Erfindung relevant ist nur der in Figur 7 rechte Teil, nämlich der Vorsprung 15. Dieser hat, wie die in Figur 7 vertikalen Linien verdeutlichen, eine zu seinem distalen Ende hin zunehmende Materialstärke, und zwar zur mechanischen Stabilisierung der in Draufsicht relativ dünnen Struktur. Der Vorsprung 15 ist also dicker als der daran links anschließende plattenartige Teil.

Zunächst trägt der Vorsprung 15 an seinem distalen Ende einen Haken 16, der gemäß Figur 4 durch die Öffnung hindurch geführt ist und somit nicht an der Befestigung eines Moduls 1 an der Abdeckplatte 12 teilnimmt. Allerdings wäre das auch eine Möglichkeit zur Befestigung, der Haken 16 könnte also auch in der Öffnung über eine der Blechkanten geführt und damit in gewissem Sinn verriegelt werden, vergleiche die noch folgende Erläuterung zu der zweiten Verriegelungsmöglichkeit zwischen den Modulen 1 und der Abdeckplatte 12. Auch könnte eine hier nicht eingezeichnete Rastnase nach unten weisen und könnte sich der Vorsprung 15 dann infolge der Schwerkraft in der rechteckigen ausgestanzten Öffnung in der Abdeckplatte 12 festhängen. Das ist auch ohne solche Rastnasen möglich, wobei die in Figur 7 etwas links von dem Haken 16 erkennbare winkelartige Ausnehmung die Eingriffstiefe in diese Öffnung begrenzt, also als Anschlag dient.

Im vorliegenden Fall dient der Haken 16 allerdings zu einem anderen vorteilhaften Zweck, nämlich zur Schnappverriegelung eines vollständig eingeschränkten Moduls 1 an dem Achsstift der Schwenkachse 13 der Abdeckplatte 12. Wenn also mit den Modulen 1 gearbeitet wird, schwenken diese nicht unbeabsichtigt hinaus, sondern sind in ihrer eingeschwenkten Position gesichert. Insbesondere kann eine Bedienperson genau ein gerade interessierendes Modul 1 ausschwenken und an der Abdeckplatte 12 verriegeln, wobei etwaige Module 1 darüber eingeschwenkt bleiben und damit den Zugang nicht behindern.

In den Figuren 5 und 6 sind die Module 1 in einer weiter ausgeschwenkten Position und in anderer Weise mit der Abdeckplatte 12 verriegelt. In dieser weiter ausgeschwenkten Position ist das jeweils oberste Modul 1 von oben praktisch vollständig zugänglich, vergleiche Figur 6, wohingegen in der Schwenkposition gemäß den Figuren 3 und 4 vor allem der anhand der Figuren 1 und 2 erläuterte vordere Bereich mit den Patchstellen 2 zugänglich ist. Die weiter hinten liegenden und hier nicht eingezeichneten Spleißstellenablagen (vergleiche den zitierten Stand der Technik) sind dort noch weitgehend vom Gehäuse 11 geschützt, insbesondere können die Spleißkassetten in der Position der Figuren 1 und 2 nicht hochgeklappt werden.

Für die Arretierung gemäß den Figuren 5 und 6 dienen Öffnungen in der Abdeckplatte 12, die nicht, wie die bisher behandelten ungefähr mittig bezüglich der Breitenrichtung liegen, sondern bezüglich der Schwenkachse 13 distaler (bei etwa 80 % der Breite). Die Öffnungen sind etwas kleiner, aber gleichermaßen ausgestanzte rechteckige Öffnungen. Zum Eingriff dienen Haken 17, die in den Figuren 5 und 6 kaum sichtbar sind, aber in Figur 8 an einem Teil 18 im hinteren Bereich eines Moduls vergrößert dargestellt sind. Dieses Teil 18 ist ein im Übrigen dem LWL-Kabelmanagement in dem Modul 1 dienendes Kunststoffspritzgussteil, an dem sich der Haken 17 leicht vorsehen lässt. Er liegt damit ungefähr im (bezüglich des eingeschwenkten Zustandes) hinteren rechten Eckbereich eines Moduls 1. Die Hakenform weist nach unten, sodass die entsprechende Öffnung in der Abdeckplatte 12 zunächst von dem Haken 17 durchdrungen werden kann und dieser dann, wenn er weit genug hineingefahren ist, infolge des Gewichts des entsprechenden Moduls von allein verrastet. Umgekehrt muss ein solcher Haken 17 zum Lösen einfach etwas angehoben werden. Natürlich würde sich eine Keilform, die hier nicht vorhanden ist, mit der Hakenverriegelung kombinieren lassen, aber eine Verriegelung ist auch allein aufgrund des Hakens 17 möglich.

Beim Vergleich der Figuren 3 und 4 einerseits und andererseits 5 und 6 erkennt man leicht, dass verschiedene Schwenkpositionen des Moduls mindestens verschiedene Verriegelungselemente an demselben Modul 1 oder zugehörige Verriegelungselemente (Öffnungen) an der Abdeckplatte 12 erfordern, wobei aber die Kombination aus beidem in einfacher Weise einen großen Winkelunterschied zwischen den beiden jeweils verriegelbaren Schwenkpositionen erzeugt.

Nach Aufschwenken der Abdeckplatte 12 sind die einzelnen Module grundsätzlich unverdeckt (von vorn), also nur noch nach den übrigen Seiten vom Gehäuse umfasst. Insbesondere sind die anhand der Figuren 1 und 2 erläuterten Patchstellen 2 und die davorliegenden Führungsstiftreihen 4 mit den darin geführten Kabeln direkt zugänglich.

Natürlich kann der Modulstapel aus den Figuren 3 bis 6 in gleicher Weise in einem Verteilerschrank Verwendung finden wie in dem zitierten Stand der Technik erläutert.

## Patentansprüche

1. Schwenkmoduleinrichtung für LWL-Kabelmanagement mit einem Gehäuse (11) und
einem daran um eine vertikale Modulachse schwenkbar gehaltenen und in das Gehäuse (11) hinein sowie aus ihm heraus schwenkbaren Schwenkmodul (1) zur Aufnahme von LWL-Kabeln (3) sowie
einer Abdeckplatte (12) zum Abdecken des Schwenkmoduls (1) in einem in das Gehäuse (11) eingeschwenkten Zustand des Schwenkmoduls (1), welche Abdeckplatte (12) um eine von der Modulachse entfernte und zu ihr parallele Abdeckplattenachse (13) auf- und zuschwenkbar ist und in der zugeschwenkten Position das Schwenkmodul (1) abdeckt,
**dadurch gekennzeichnet, dass**
das Schwenkmodul (1) und die Abdeckplatte (12) so ausgestaltet sind, dass sie in einem zumindest teilweise ausgeschwenkten Zustand aneinander arretierbar sind, sodass die Abdeckplatte (12) das Schwenkmodul (1) in diesem arretierten Zustand stützt.

2. Schwenkmoduleinrichtung nach Anspruch 1 mit einem Stapel aus einer Mehrzahl entlang einer Richtung der Modulachse gestapelten Schwenkmodulen (1), wobei vorzugsweise für eine Mehrzahl der Schwenkmodule (1) und besonders bevorzugterweise für alle Schwenkmodule (1) des Stapels eine gemeinsame und mit den jeweiligen Schwenkmodulen (1) arretierbare Abdeckplatte (12) vorgesehen ist.

3. Schwenkmoduleinrichtung nach Anspruch 1 oder 2, bei der das zumindest eine Schwenkmodul (1) keine weitere, ihm zugeordnete schwenk- oder klappbare Abdeckplatte aufweist.

4. Schwenkmoduleinrichtung nach einem der vorstehenden Ansprüche, bei der die Modulachse näher an einer Vorderseite der Schwenkmoduleinrichtung als an ihrer Hinterseite und dabei außermittig zu einer der beiden Seiten der Schwenkmoduleinrichtung und die Abdeckplattenachse (13) ebenfalls näher an der Vorderseite als an der Hinterseite und außermittig zu der anderen der beiden Seiten angeordnet ist.

5. Schwenkmoduleinrichtung nach einem der vorstehenden Ansprüche, bei der die Abdeckplatte (12) und das zumindest eine Schwenkmodul (1) in zwei verschiedenen Schwenkpositionen aneinander arretierbar sind.

6. Schwenkmoduleinrichtung nach Anspruch 5, mit an einer Vorderseite des Schwenkmoduls (1) angeordneten Patchstellen (2) für das LWL-Kabelmanagement, bei der diese Patchstellen (2) in einer weniger weit ausgeschwenkten der Schwenkpositionen zugänglich sind und andere, weiter innenliegende Teile des Schwenkmoduls (1) nicht.

7. Schwenkmoduleinrichtung nach Anspruch 5 oder 6, mit Spleißstellenablagen für das LWL-Kabelmanagement in dem Schwenkmodul (1), welche Spleißstellenablagen in einer weiter ausgeschwenkten der Schwenkpositionen zugänglich sind, in der anderen der beiden Schwenkpositionen aber nicht.

8. Schwenkmoduleinrichtung nach einem der vorstehenden Ansprüche, bei der die Abdeckplatte (12) und das Schwenkmodul (1) durch Eingriff eines Vorsprungs (15,17) in eine Öffnung miteinander arretierbar sind, wobei vorzugsweise die Öffnung in der Abdeckplatte (12) und der Vorsprung (15,17) an dem Schwenkmodul (12) angeordnet ist.

9. Schwenkmoduleinrichtung nach einem der Ansprüche 8, bei der der Vorsprung (17) einen Haken aufweist, mit dem der Vorsprung (17) in der Öffnung gegen Herausziehen gesichert werden kann.

10. Schwenkmoduleinrichtung nach einem der Ansprüche 8 oder 9, bei der der Vorsprung (15) einen Haken (16) aufweist und an dem Schwenkmodul (1) vorgesehen ist, wobei das Schwenkmodul (1) mithilfe des Hakens (16) in einem eingeschwenkten Zustand gesichert werden kann, vorzugsweise an der Abdeckplattenachse (13).

11. Schwenkmoduleinrichtung nach einem der vorstehenden Ansprüche, mindestens Anspruch 5, bei der die Arretierungseinrichtungen (15-17) für die beiden Schwenkpositionen voneinander verschieden sind.

12. Schwenkmoduleinrichtung nach Anspruch 8 und 11, bei der an dem Schwenkmodul (1) an einer von der Schwenkmodulachse (A) distalen vorderen Ecke ein Vorsprung (15) und in einem mittleren Bereich der Abdeckplatte (12) eine zugeordnete Öffnung vorgesehen ist, wobei dieser Vorsprung (15) und diese Öffnung in einer weniger ausgeschwenkten der Schwenkpositionen miteinander arretiert werden können.

13. Schwenkmoduleinrichtung nach Anspruch 8 und 11, optional in Verbindung mit Anspruch 12, bei der an einer zu der Schwenkmodulachse (A) distalen hinteren Ecke des Schwenkmoduls ein Vorsprung (17) vorgesehen ist und an einer in Bezug zu der Mitte achsendistaleren Stelle der Abdeckplatte (12) eine zugeordnete Öffnung vorgesehen ist, wobei dieser Vorsprung (17) und diese Öffnung in einer weiter ausgeschwenkten der Schwenkpositionen miteinander arretiert werden können.

14. Verwendung einer Schwenkmoduleinrichtung nach einem der vorstehenden Ansprüche, bei der das Schwenkmodul (1) und die Abdeckplatte (12) im dem zumindest teilweise ausgeschwenktem Zustand aneinander arretiert werden.

15. Verwendung einer Schwenkmoduleinrichtung nach einem der Ansprüche 1 bis 13 eheoder Verwendung nach Anspruch 14, bei der die Abdeckplatte (12) zumindest an der Innenseite oder der Außenseite beschriftet wird.

## Claims

1. A pivoting module device for optical fibre cable management, comprising:
a housing (11) and
a pivoting module (1) for receiving optical fibre cables (3), which is held on the housing (11) so as to be pivotable around a vertical module axis and pivotable into and out of the housing; and
a cover plate (12) for covering the pivoting module (1) when the pivoting module (1) is pivoted into the housing (11), which cover plate (12) can be pivoted open and closed around a cover plate axis (13) at a distance from the module axis and parallel thereto and, in the closed position, covers the pivoting module (1),
**characterised in that**
the pivoting module (1) and cover plate (12) are configured so that they can be locked against each other when at least partially pivoted outwards, such that the cover plate (12) supports the pivoting module (1) in this locked state.

2. The pivoting module device according to claim 1 with a stack of a plurality of pivoting modules (1) stacked along a direction of the module axis, wherein a common cover plate (12) lockable with the respective pivoting modules (1) is preferably provided for a plurality of pivoting modules (1) and particularly preferably for all pivoting modules (1) of the stack.

3. The pivoting module device according to claim 1 or 2, wherein the at least one pivoting module (1) does not have any further pivotable or folding plates assigned to it.

4. The pivoting module device according to one of the preceding claims, wherein the module axis is located closer to a front face of the pivoting module device than its rear face and excentrically to one of the two sides of the pivoting module device and the cover plate axis (13) is also located closer to the front face than to the rear face and at the same time excentrically to the other two sides.

5. The pivoting module device according to one of the preceding claims, wherein the cover plate (12) and the at least one pivoting module (1) can be locked against each other in two different pivoting positions.

6. The pivoting module device according to claim 5, with patch points (2) for optical fibre cable management arranged on a front face of the pivoting module (1), wherein these patch points (2) are accessible in the pivoting position that is pivoted less far outwards and other parts of the pivoting module (1) that are deeper inside the module are not accessible.

7. The pivoting module device according to claim 5 or 6, with splice point receivers for optical fibre cable management in the pivoting module (1), which splice point receivers are accessible in the pivoting position that is pivoted further outwards, but not in the other of the two pivoting positions.

8. The pivoting module device according to one of the preceding claims, wherein the cover plate (12) and the pivoting module (1) can be mutually locked by means of the engagement of a projection (15, 17) in an opening, wherein the opening is preferably arranged in the cover plate (12) and the projection (15, 17) is arranged on the pivoting module (12).

9. The pivoting module device according to claim 8, wherein the projection (17) has a hook by means of which the projection (17) can be secured in the opening against being pulled out.

10. The pivoting module device according to one of claims 8 and 9, wherein the projection (15) has a hook (16) and is provided on the pivoting module (1), wherein the pivoting module (1) can be secured in its position as pivoted inwards by means of the hook (16), preferably on the cover plate axis (13).

11. The pivoting module device according to one of the preceding claims, at least claim 5, wherein the locking devices (15-17) for the two pivoting positions are different from each other.

12. The pivoting module device according to claims 8 and 11, wherein a projection (15) is provided on the pivoting module (1) on a front corner distal from the pivoting module axis (A) and an assigned opening is provided in a central area of the cover plate (12), wherein this projection (15) and this opening can be locked together in the pivoting position that is pivoted less far outwards.

13. The pivoting module device according to claims 8 and 11, optionally in conjunction with claim 12, wherein a projection (17) is provided on a rear corner of the pivoting module which is distal to the pivoting module axis (A) and an assigned opening is provided in a position of the cover plate (12) which is more distal to the axis relative to the centre, wherein this projection (17) and this opening can be locked together in the pivoting position that is pivoted less far outwards.

14. Use of a pivoting module device according to one of the preceding claims, wherein the pivoting module (1) and the cover plate (12) are locked against each other in the position at least partially pivoted outwards.

15. The use of a pivoting module device according to one of claims 1 to 13, or the use according to claim 14, wherein the cover plate (12) is labelled at least on the inside or on the outside.

## Revendications

1. Dispositif à module pivotant pour gestion de câbles à fibres optiques, comportant :
un boîtier (11), et
un module pivotant (1) destiné à recevoir des câbles à fibres optiques (3), lequel est retenu pivotant sur ledit boîtier (11) autour d'un axe module vertical et est susceptible de rentrer et de sortir de ce dernier par pivotement, ainsi que
une plaque de recouvrement (12) destinée à recouvrir le module pivotant (1) une fois le module pivotant (1) rentré dans le boîtier (11) par pivotement, laquelle plaque de recouvrement (12) est susceptible d'être ouverte et fermée par pivotement autour d'un axe (13) distant de l'axe module et parallèle à ce dernier, et recouvre ledit module pivotant (1) en position fermée,
**caractérisé en ce que**
le module pivotant (1) et la plaque de recouvrement (12) sont conçus de manière à se bloquer l'un contre l'autre à l'état au moins partiellement sorti, si bien que la plaque de recouvrement (12) supporte le module pivotant (1) sous cet état de blocage.

2. Dispositif à module pivotant selon la revendication 1 comportant un empilement d'une multiplicité de modules pivotants (1) empilés dans la direction de l'axe module, et dans lequel il est prévu une plaque de recouvrement (12) qui est commune de préférence à une multiplicité desdits modules pivotants (1) et tout préférablement à tous les modules pivotants (1) de l'empilement et qui est susceptible d'être en blocage avec les divers modules pivotants (1).

3. Dispositif à module pivotant selon la revendication 1 ou 2, dans lequel l'au moins un module pivotant (1) ne présente aucune autre plaque de recouvrement pivotante ou rabattable qui lui est associée.

4. Dispositif à module pivotant selon l'une des revendications précédentes, dans lequel l'axe module est plus proche d'une face avant du dispositif à module pivotant que de sa face arrière et se trouve en même temps disposé excentré par rapport à l'un des deux côtés du dispositif à module pivotant et l'axe de plaque de recouvrement (13) est également plus proche de la face avant que de la face arrière et excentré par rapport à l'autre des deux côtés.

5. Dispositif à module pivotant selon l'une des revendications précédentes, dans lequel la plaque de recouvrement (12) et l'au moins un module pivotant (1) peuvent être bloqués l'un contre l'autre dans deux positions de pivotement différentes.

6. Dispositif à module pivotant selon la revendication 5, comportant, sur une face avant du module pivotant (1), des points de raccordement (2) destinés à la gestion des câbles à fibres optiques, ces points de raccordement (2) étant accessibles dans celle des positions de pivotement qui est moins ouverte, et d'autres pièces plus enfouies du module pivotant (1) ne l'étant pas.

7. Dispositif à module pivotant selon la revendication 5 ou 6, comportant des éléments récepteurs de points d'épissure destinés à la gestion des câbles à fibres optiques dans le module pivotant (1), lesquels éléments récepteurs de points d'épissure sont accessibles dans celle des positions de pivotement qui est plus ouverte, mais ne le sont pas dans l'autre des deux positions de pivotement.

8. Dispositif à module pivotant selon l'une des revendications précédentes, dans lequel la plaque de recouvrement (12) et le module pivotant (1) peuvent être bloqués l'un par l'autre par encliquetage d'une partie en saillie (15, 17) dans une ouverture, ladite ouverture étant de préférence située dans la plaque de recouvrement (12) et ladite partie en saillie (15, 17) sur le module pivotant (12).

9. Dispositif à module pivotant selon la revendication 8, dans lequel la partie en saillie (17) présente un crochet grâce auquel ladite partie en saillie (17) peut être empêchée de sortir de ladite ouverture.

10. Dispositif à module pivotant selon l'une des revendications 8 et 9, dans lequel la partie en saillie (15) présente un crochet (16) et est prévue sur le module pivotant (1), ledit module pivotant (1) pouvant être fixé dans un état rentré, de préférence sur l'axe de plaque de recouvrement (13), à l'aide du crochet (16).

11. Dispositif à module pivotant selon l'une des revendications précédentes, au moins selon la revendication 5, dans lequel les dispositifs de blocage (15-17) relatifs aux deux positions de pivotement sont différents l'un de l'autre.

12. Dispositif à module pivotant selon les revendications 8 et 11, dans lequel le module pivotant (1) présente, dans un coin avant qui est distant de l'axe de module pivotant (A), une partie en saillie (15) et, dans une zone médiane de la plaque de recouvrement (12), une ouverture associée, cette partie en saillie (15) et cette ouverture pouvant être bloquées l'une par l'autre dans celle des positions de pivotement qui est moins ouverte.

13. Dispositif à module pivotant selon les revendications 8 et 11, facultativement en conjonction avec la revendication 12, dans lequel une partie en saillie (17) est prévue dans un coin arrière du module pivotant qui est distant de l'axe de module pivotant (A) et une ouverture associée est prévue en un point de la plaque de recouvrement (12) qui est plus éloigné de l'axe par rapport au centre, cette partie en saillie (17) et cette ouverture pouvant être bloquées l'une par l'autre dans celle des positions de pivotement qui est moins ouverte.

14. Utilisation d'un dispositif à module pivotant selon l'une des revendications précédentes, dans lequel le module pivotant (1) et la plaque de recouvrement (12) sont bloqués l'un contre l'autre à l'état au moins partiellement sorti.

15. Utilisation d'un dispositif à module pivotant selon l'une des revendications 1 à 13, ou utilisation selon la revendication 14, dans lequel la plaque de recouvrement (12) reçoit une inscription au moins sur sa face intérieure ou sa face extérieure.
